# EUROPÄISCHE PATENTSCHRIFT

(11) **EP 1 336 453 B1**
(45) Veröffentlichungstag und Bekanntmachung des Hinweises auf die Patenterteilung: **06.04.2005**
(21) Anmeldenummer: 03000959.1
(22) Anmeldetag: 16.01.2003
(51) Int. Cl.: B23Q 3/10, E04C 2/54

(54) **Sandwichplatte zum Aufbau von Werkstück-Aufspannvorrichtungen**
Sandwich panel for building workpiece clamping devices
Panneau sandwich pour construire des dispositifs de serrage pour pièces

(30) Priorität: 13.02.2002 DE 20202108 U
(43) Veröffentlichungstag der Anmeldung: 20.08.2003
(73) Patentinhaber: Horst Witte Entwicklungs- und Vertriebs-KG, 21369 Nahrendorf (DE)
(72) Erfinder: Witte, Horst, 21369 Nahrendorf (DE)
(74) Vertreter: von Raffay, Vincenz, Dipl.-Ing.

(56) Entgegenhaltungen:
- EP-A- 0 797 043
- US-A- 4 886 257
- US-A- 5 773 783
- US-A- 6 051 325

## Beschreibung

Die Erfindung betrifft eine Sandwichplatte nach dem Oberbegriff des Anspruches 1.

Sandwichplatten sind Schalenbauelemente, die in ihrer gesamten Oberfläche und in allen Richtungen ausgesteift sind. Sie erfüllen die Forderungen nach gleichmäßiger Spannungsverteilung, größtmöglicher Formsteifigkeit, hoher und gleichmäßiger Festigkeit gegen Ausbeulen und Knicken bei relativ geringem Gewicht. Die Sandwichplatten der eingangs genannten Art werden vorzugsweise in Verbindung mit Werkstückspannsystemen eingesetzt, die der Aufspannung und Fixierung von Werkstücken auf Werkzeug- und Meßmaschinen dienen. Ein solches Aufspannsystem ist aus der EP 0 222 147 B 1 bekannt. Die Sandwichplatte ist insbesondere zum Aufbau derartiger Aufspannsysteme geeignet. Sie kann auch die Grundplatte für diese bekannten Aufspannsysteme bilden. Es sind aber auch andere Einsatzgebiete denkbar, beispielsweise der Einsatz als hochwertige Transportpalette für derartige Werkstückspannsysteme.

Aus der EP 0 797 043 A2 ist bereits eine Platte aus einer Aluminiumlegierung bekannt, die aus einzelnen fachwerkartig aufgebauten stranggepreßten Profilen aufgebaut wird. Die einzelnen Profile werden durch Reib-Schweißen an den Stoßstellen miteinander verbunden. Beim Reib-Schweißen wird ein besonderes Schweißwerkzeug eingesetzt, das durch seine Relativbewegung zu den verschweißenden Teilen die erforderliche Wärme zum Verschweißen erzeugt.

Der Erfindung liegt nun die Aufgabe zugrunde, eine Sandwichplatte der eingangs genannten Art zu schaffen, die vorzugsweise aus Aluminium oder einer Aluminiumlegierung besteht und wirtschaftlich mit hoher Genauigkeit aus Standardmaterial hergestellt werden kann.

Diese Aufgabe wird durch den Anspruch 1 gelöst.

Erfindungsgemäß wird das an sich bekannte Reib-Schweißen eingesetzt, um den Zapfen, bei dem es sich auch um einen Stift, eine Stange, ein entsprechend gestaltetes Verbindungselement oder ein Distanzstück handeln kann, durch Reib-Schweißen mit der einen, vorzugsweise der oberen Platte vierbunden. Beim Reib-Schweißen, das in diesem Falle eingesetzt wird, wird ohne Werkzeug gearbeitet, d.h. dort, wo die Schweißnaht erzeugt werden soll, wird das eine Werkstück reibend in das Material eindringend relativ zu dem anderen bewegt, wobei der Werkstoff in breiigen Zustand versetzt wird, so daß eine dauerhafte Schweißverbindung entsteht. Wenn ein zylindrischer Zapfen verwendet wird, so ist dieser das eine Werkstück, das zur Erzeugung der Relativbewegung um seine Achse gedreht wird. Durch diese Art des Reib-Schweißens entsteht eine im wesentlichen glatte Oberfläche an der außen liegenden Fläche der Platte, so daß normalerweise eine mechanische Nacharbeit nicht erforderlich ist. Die Schweißnähte sind im wesentlichen auf der entsprechenden Fläche der Platte nicht erkennbar. Es tritt nur ein minimaler Verzug bei geringster Wärmeeindringung auf. Es können die unterschiedlichsten Materialien miteinander verschweißt werden. Vorzugsweise handelt es sich bei der Erfindung ebenso wie bei den angesprochenen Werkstückspannsystemen um solche aus Aluminium und Aluminiumlegierungen.

Der Zapfen oder ein ähnlich gestalteter Stützkörper kann nun in unterschiedlicher Weise ausgebildet sein.

Zum einen ist es möglich, den Zapfen wie in den Ansprüchen 2 und 3 definiert zu teilen. Die beiden Teile sind dann durch Reib-Schweißen an der entsprechend zugeordneten Platte befestigt. Die Teile selbst sind miteinander verklebt.

Es ist aber auch möglich, die Sandwichplatte so auszubilden, wie in Anspruch 4 angegeben. In diesem Falle ist der Zapfen mit einer Platte durch Reib-Schweißen verbunden. An der anderen Platte ist durch Reib-Schweißen eine Hülse befestigt, in die der Zapfen eingreift und dort mit der Hülse verklebt ist.

Im Rahmen der Erfindung sind die unterschiedlichsten Zapfengestaltungen und Verbindungen durch Verkleben denkbar.

Im folgenden wird die Erfindung unter Hinweis auf die Zeichnung anhand zweier Ausführungsbeispiele näher erläutert.

Es zeigt:
- Fig. 1: eine perspektivische Ansicht einer Ausführungsform des Sandwichplatte nach der Erfindung;
- Fig. 2: eine Einzelheit der Sandwichplatte der Fig. 1 im vergrößerten Maßstab; und
- Fig. 3: eine Einzelheit einer anders gestalteten Sandwichplatte nach der Erfindung.

Die in der Zeichnung dargestellte Sandwichplatte 1 besteht aus einer oberen Platte 2, die normalerweise eine Aufspannfläche zum Aufbau von Werkstück-Spannvorrichtungen bildet. Zu diesem Zweck sind Befestigungsbohrungen 5 vorgesehen.

Die Stützkörper werden durch Zapfen 3 gebildet, die in unterschiedlichster Weise gestaltet sein können.

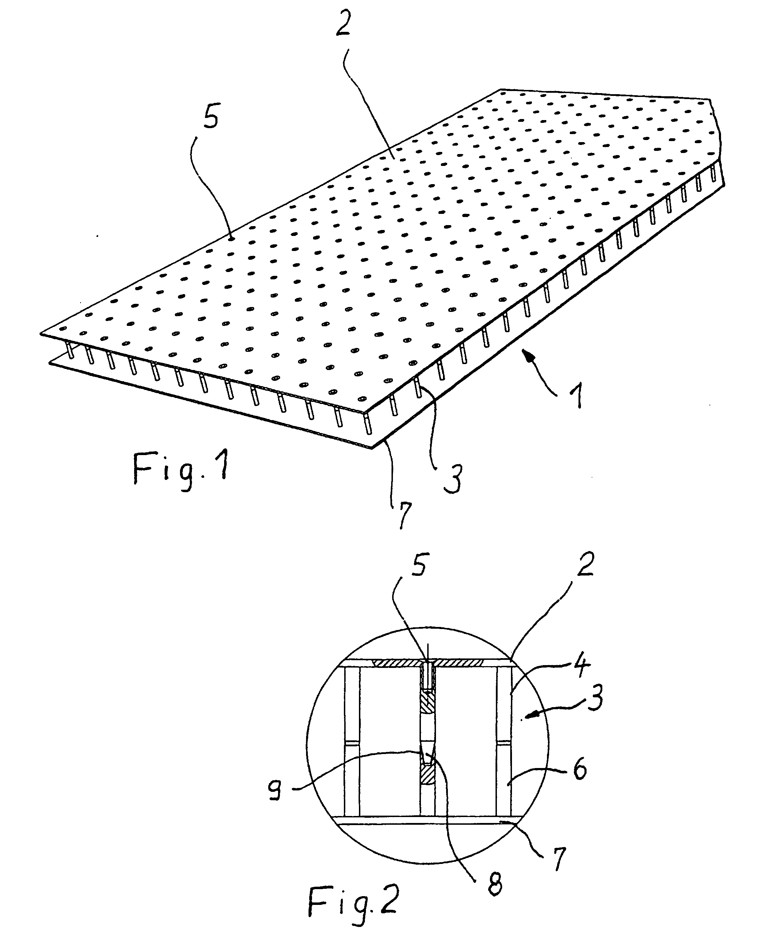

Bei der Ausführungsform nach Fig. 2 ist jeder Zapfen 3 geteilt, so daß zwei Abschnitte 4 und 6 entstehen. Der eine Abschnitt 4 weist einen kegelförmigen Abschnitt 8 auf, der in eine entsprechend geformte kegelförmige Vertiefung des anderen Abschnittes 6 eingreift. Der Abschnitt 8 ist mit der Vertiefung verklebt.

Der obere Abschnitt 4 ist durch Reib-Schweißen an der oberen Platte 2 und der untere Abschnitt 6 durch Reib-Schweißen an der unteren Platte 7 befestigt.

Diese Sandwichplatte nach den Figuren 1 und 2 wird so hergestellt, daß zuerst durch Reib-Schweißen die beiden Zapfenabschnitte 4 und 6 mit der zugehörigen Platte 2 bzw. 7 verbunden werden. Dann werden die Zapfenabschnitte ineinander gesteckt und verklebt. Es entsteht eine Sandwichplatte wie in Fig. 1 dargestellt.

Die Befestigungsbohrung 5 liegt in vorteilhafterweise auf der Achse eines Zapfens 3, so daß ausreichend Fleisch und Tiefe für eine gute Befestigung zur Verfügung steht. Es sind eine Reihe von Befestigungsbohrungen vorgesehen. Es ist aber nicht zwangsläufig in jedem Zapfen eine solche ausgebildet.

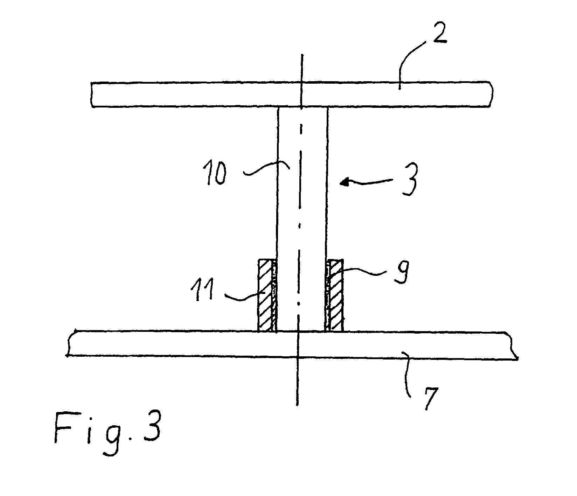

Bei der Ausführungsform nach Fig. 3 geht der Zapfen 3 praktisch als einstückiges Teil von der Platte 2 bis zur Platte 7 durch. Die Befestigung an der Platte 7 erfolgt dadurch, daß dort durch Reib-Schweißen eine Hülse 11 befestigt ist. In diese Hülse wird der Zapfenabschnitt 10 eingesteckt und verklebt (bei 9). Als Kleber kommt vorzugsweise ein Zweikomponentenepoxidharz zum Einsatz.

Im Rahmen der Erfindung bei der als Stützkörper ein Zapfen, ein Stift, eine Stange oder ein anderes entsprechendes Element verwendet wird, erfolgt die Verbindung dieses Elementes ggf. geteilt durch Reib-Schweißen mit der zugehörigen Platte durch eine Drehbewegung um die Zapfenachse. Die Abschnitte oder in anderer Weise aufgeteilten Zapfen werden dann miteinander verklebt.

## Patentansprüche

1. Sandwichplatte zum Aufbau von Werkstück-Aufspannvorrichtungen mit einer oberen, eine Aufspannfläche bildenden Platte (2) mit Befestigungsbohrungen (5), einer unteren, eine Auflagefläche bildenden Platte (7) und dazwischen liegenden Stützkörpern, **dadurch gekennzeichnet, daß** die Stützkörper durch Zapfen (3) oder dgl. gebildet sind, die an der einen Platte (2) durch Reib-Schweißen befestigt und mit der anderen Platte (7) verklebt sind.

2. Sandwichplatte nach Anspruch 1, **dadurch gekennzeichnet, daß** der Zapfen (3) geteilt ist, wobei beide Teile (4,6) mit der zugeordneten Platte (2 bzw. 7) durch Reib-Schweißen verbunden und miteinander verklebt sind.

3. Sandwichplatte nach Anspruch 2, **dadurch gekennzeichnet, daß** die Klebestelle (9) durch einen kegelförmigen Abschnitt (8) gebildet ist, die in eine entsprechend geformte Vertiefung des anderen Zapfenabschnittes eingreift.

4. Sandwichplatte nach Anspruch 1, **dadurch gekennzeichnet, daß** die Klebestelle (9) durch eine Hülse (11) gebildet ist, die mit der dem Zapfen (10) gegenüberliegenden Platte (7) durch Reib-Schweißen verbunden und mit dem Zapfen (10) verklebt (bei 9) ist.

5. Sandwichplatte nach einem oder mehreren der vorstehenden Ansprüche 2, **dadurch gekennzeichnet, daß** die Platten (2,7) und die Zapfen (3) aus Aluminium oder einer Aluminiumlegierung bestehen.

## Claims

1. Sandwich panel for the construction of workpiece clamping fixtures with an upper plate (2) forming a clamping surface and having fixing holes (5), a lower plate (7) forming a mounting surface and support bodies located between the same, **characterized in that** the support bodies are formed by pins (3) or the like, which are fixed to plate (2) by friction welding and are bonded to the other plate (7).

2. Sandwich panel according to claim 1, **characterized in that** the pins (3) are split, both parts (4, 6) being connected to the associated plate (2 or 7) by friction welding and are bonded together.

3. Sandwich panel according to claim 2, **characterized in that** the adhesion point (9) is formed by a conical portion (8), which engages in a correspondingly shaped depression of the other pin portion.

4. Sandwich panel according to claim 1, **characterized in that** the adhesion point (9) is formed a sleeve (11), which is connected to the plate (7) facing the pin (10) by friction welding and is bonded to said pin (10) at (9).

5. Sandwich panel according to one or more of the preceding claims 2, **characterized in that** the plates (2, 7) and the pins (3) are made from aluminium or an aluminium alloy.

## Revendications

1. Panneau sandwich pour le montage de dispositifs de serrage de pièces à usiner composé d'un panneau supérieur (2) constituant une surface de serrage et comportant des perçages de montage (5), d'un panneau inférieur (7) constituant une surface d'appui, ainsi que d'éléments de support disposés entre ces deux panneaux, **caractérisé en ce que** les éléments de support sont constitués de chevilles (3) ou d'éléments similaires fixés à l'un des panneaux (2) par soudure à friction et collés à l'autre panneau (7).

2. Panneau sandwich selon la revendication 1, **caractérisé en ce que** la cheville (3) est divisée, les deux parties (4,6) étant fixées aux panneaux correspondants (2,7) par soudure à friction et étant collés entre eux.

3. Panneau sandwich selon la revendication 2, **caractérisé en ce que** la zone d'encollage (9) est constituée d'une découpe conique (8) s'adaptant à un évidement correspondant dans l'autre partie de la cheville.

4. Panneau sandwich selon la revendication 1, **caractérisé en ce que** la zone d'encollage (9) est constituée d'une douille (11) fixée par soudure à friction au panneau (7) opposé à la cheville (10) et assemblée par collage (9) à la cheville (10).

5. Panneau sandwich selon une ou plusieurs des revendications précédentes, **caractérisé en ce que** les panneaux (2,7) et les chevilles (3) sont constitués d'aluminium ou d'un alliage d'aluminium.
